# EUROPÄISCHE PATENTSCHRIFT

(11) **EP 1 747 842 B1**
(45) Veröffentlichungstag und Bekanntmachung des Hinweises auf die Patenterteilung: **27.02.2008**
(21) Anmeldenummer: 06015106.5
(22) Anmeldetag: 20.07.2006
(51) Int. Cl.: B23Q 1/32, B23Q 1/70, B23Q 1/48

(54) **Vorrichtung zum materialabtragenden Bearbeiten eines Werkstücks**
Device for material removing machining of a workpiece
Dispositif pour usiner une pièce par enlèvement de matière

(30) Priorität: 28.07.2005 DE 102005035350
(43) Veröffentlichungstag der Anmeldung: 31.01.2007
(73) Patentinhaber: AB SKF, S-415 50 Göteborg (SE)
(72) Erfinder: Brosig, Burkhard, 97535 Wasserlosen / Kaisten (DE); van Haarlem, Liesbeth, 97421 Schweinfurt (DE); Stahl, Erwin, 97714 Rottershausen (DE); White, Thomas, 97421 Schweinfurt (DE); Wiesenau, Doreen, 97525 Schwebheim (DE)
(74) Vertreter: Kohl, Thomas

(56) Entgegenhaltungen:
- DE-C- 68 201
- DE-C2- 2 351 286
- US-A- 5 090 489

## Beschreibung

Die Erfindung betrifft eine Vorrichtung zum materialabtragenden Bearbeiten eines Werkstücks.

In einigen technischen Einsatzgebieten ist es bekannt, in einem nach außen hin abschließbaren Bearbeitungsraum einen materialabtragenden Bearbeitungsprozess durchzuführen, wobei innerhalb des Bearbeitungsraums ein den Materialabtrag bewirkendes Werkzeug samt dessen Antriebsmitteln von außerhalb des Bearbeitungsraums wenigstens in einer Raumrichtung längsverschieblich und gleichzeitig drehbar sind. Dabei soll eine dafür vorgesehene Vorrichtung oftmals mit möglichst geringen Abmessungen ausgebildet sein, so dass eine hohe Kompaktheit erzielbar ist. Weiterhin sind an das damit zu bearbeitende Werkstück vielfach höchste Genauigkeitsanforderungen gestellt.

Aus der US 5,090,489 ist eine Bearbeitungseinheit für Werkzeugmaschinen mit mehreren Bearbeitungsstationen bekannt, bei der eine Werkzeugspindel längsverschieblich im Inneren einer Verschiebungseinheit aufgenommen ist, die aus einer hohl ausgebildeten Gewindespindel und einer Gewindemutter mit zugeordneter Hülse besteht. Die Werkzeugspindel ist an der Vorderseite in der Gewindemutter drehbar gelagert, jedoch gegenüber der Gewindemutter axial nicht verschiebbar. Auf der Antriebsseite ist die Werkzeugspindel als genutete Welle ausgebildet, die z.B. mit einem nabenartigen Zahnrad wirkverbunden ist, welches im Körper der Bearbeitungseinheit drehbar, aber axial nicht verschiebbar gelagert ist. Die Gewindespindel ist drehbar, aber axial nicht verschiebbar im Inneren der Bearbeitungseinheit gelagert und über einen in beiden Drehrichtungen antreibbaren Motor antreibbar.

Eine Aufgabe der vorliegenden Erfindung ist es daher, eine Vorrichtung zum materialabtragenden Bearbeiten eines Werkstücks innerhalb eines Bearbeitungsraums, bei dem ein den Materialabtrag bewirkendes Werkzeug innerhalb des Bearbeitungsraums von außerhalb des Bearbeitungsraums längsverschieblich und drehbar ist, derart auszubilden, dass bei kompakter Bauweise der Vorrichtung ein Bearbeiten des Werkstücks mit hoher Präzision sichergestellt ist.

Die Aufgabe wird durch den Gegenstand des Patentanspruchs 1 gelöst. Vorteilhafte Ausgestaltungen sind in den Unteransprüchen beschrieben.

Gemäß Patentanspruch 1 beinhaltet eine Vorrichtung zum materialabtragenden Bearbeiten eines Werkstücks folgende Merkmale:
- Ein Bearbeitungsraum, in dem das Werkstück und eine materialabtragende Werkzeugeinrichtung anordenbar sind, mit wenigstens einer verschließbaren Zugangsöffnung, und
- wenigstens ein Wälzlager mit einem Außenteil und mit einem Innenteil, wobei zwischen dem Außen- und dem Innenteil angeordnete Wälzkörper das Innenteil gegenüber dem Außenteil sowohl drehbar als auch längsverschieblich lagern,
- das Außenteil ist eine Wandung des Bearbeitungsraums durchdringend angeordnet,
- ein innerhalb des Bearbeitungsraums angeordnetes axiales Ende des Innenteils ist mit Mitteln zum Halten des Werkstücks oder der Werkzeugeinrichtung verbindbar, und
- das andere, außerhalb des Bearbeitungsraums angeordnete axiale Ende des Innenteils ist mit Mitteln zum Drehen und Längsverschieben des Innenteils verbindbar.

Dadurch, dass ein Wälzlager eingesetzt wird, bei dem mit ein und denselben Wälzkörpern gleichzeitig ein Längsbewegen als auch ein Drehen ermöglicht wird, ist insbesondere in radialer Richtung des Wälzlagers eine besonders kompakte Dimensionierung möglich. Weiterhin ist, durch die Wälzlagertechnik bedingt, das Innenteil gegenüber dem Außenteil spielfrei bewegbar, womit mit Vorteil eine sehr hohe Präzision beim Bewegen des Werkzeugs erreicht wird. Dazu kann das Wälzlager insbesondere mit einer leichten Vorspannung ausgebildet sein.

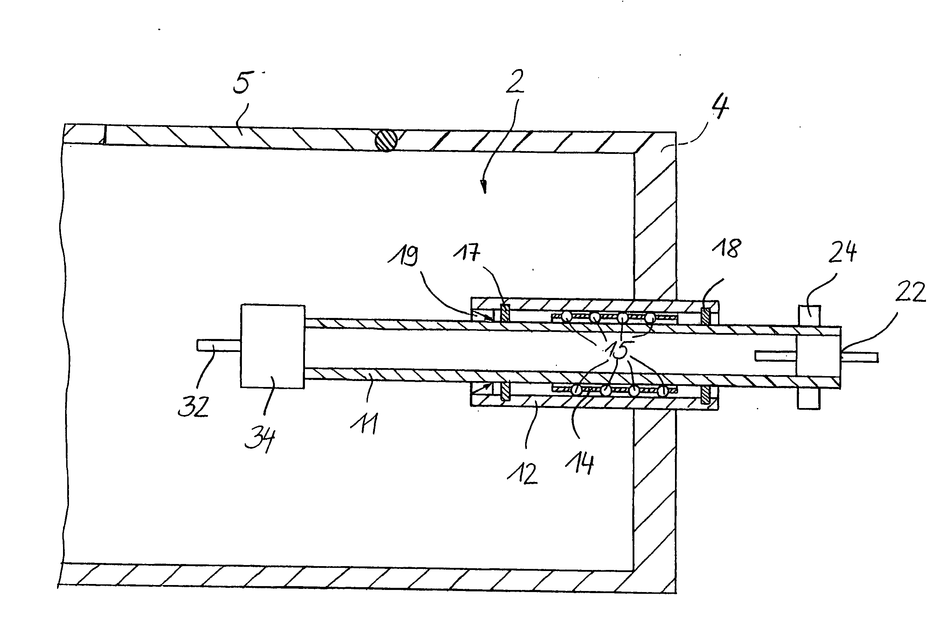

Weitere Vorteile, Merkmale und Einzelheiten der Erfindung ergeben sich aus dem im folgenden beschriebenen Ausführungsbeispiel der Erfindung anhand der Figur.

Die Figur zeigt dabei als ein Ausführungsbeispiel der Erfindung ausschnittsweise einen Längsschnitt durch eine Vorrichtung zum materialabtragenden Bearbeiten eines Werkstücks. Die Vorrichtung umfasst einen Bearbeitungsraum 2, der im wesentlichen von einer Wandung 4 begrenzt ist, die mit einer Zugangsöffnung versehen ist, die mittels einer nach außen hin öffenbaren Klappe 5 im wesentlichen dicht gegen Flüssigkeiten verschließbar ist. Die Wandung 4 ist dabei an wenigstens einer Stelle von einem Wälzlager durchdrungen, wobei ein Außenmantel eines hülsenartigen Außenteils 12 des Wälzlagers fest und dicht mit der Wandung 4 verbunden ist. Das Wälzlager umfasst weiterhin ein rohrartiges Innenteil 11, das über als Kugeln 15 ausgebildete Wälzkörper gegenüber dem Außenteil 12 axial verschiebbar und gleichzeitig drehbar im Außenteil 12 gelagert ist. Das rohrartige Innenteil 11 ist dabei dünnwandig, insbesondere mit einer Wanddicke kleiner in etwa 1,5 mm ausgebildet.

Die Kugeln 15 sind dabei in einem Käfig 14 geführt, wobei der Käfig 14 je Kugel 15 eine Aufnahmeöffnung aufweist. Weiterhin ist der Käfig 14 derart ausgebildet, dass die Kugeln 15 in Reihen parallel zur Hauptachse des hohlzylinderartigen Käfigs 14 und von Reihe zu Reihe in Hauptachsrichtung zueinander versetzt angeordnet sind. In anderen Ausführungsformen können die Kugeln bezüglich der Hauptachse des Käfigs natürlich auch gemäß schrägverlaufenden Reihen angeordnet sein, wobei für derartige und weitere Ausbildungen des Käfigs exemplarisch auf die DE 1 767 635 U und DE 23 51 286 A1 hingewiesen wird. In wiederum anderen Ausführungsformen können die Kugeln auch entsprechend einer an verschiedenen Stellen des Mantels des Käfigs unterschiedlich erwarteten Momentenbelastung platziert sein. Der Käfig 14 kann dabei beispielsweise aus Kunststoff, Aluminium oder Messing ausgebildet sein. Weiterhin sind in ringartige am Innenmantel des Außenteils 12 umlaufende Nuten entsprechende Sprengringe 17 und 18 eingesetzt, die in Achsrichtung einen Anschlag für ein Bewegen des Käfigs 14 bilden. Ferner ist zwischen dem Innenteil 11 und dem Außenteil 12 wenigstens an einem axialen Ende des Innenteils eine Dichtung 19 für ein Abdichten des Bearbeitungsraums nach außen hin angeordnet. Dabei kann in einer Ausführungsform auf der dem Bearbeitungsraum abgewandten Seite der Dichtung 19 zusätzlich eine Sperrluftzuführung vorgeschrieben sein, so dass durch Aufbau eines entsprechenden Überdrucks auf besagter Seite der Dichtung 19 die Dichteigenschaften verbessert sind.

Am bearbeitungsraumseitigen axialen Ende des Innenteils 11 ist ein Fräser 32 samt seinen ihm zugehörigen Antriebsmitteln 34 angeordnet. Dabei umfassen die Antriebsmittel 34 beispielsweise einen Elektromotor, dessen Versorgungsleitungen durch die Höhlung des rohrartig ausgebildeten Innenteils 11 nach außen geführt werden können. Am anderen axialen Ende des Innenteils 11 ist das Innenteil 11 mit beispielsweise als einem Kugelgewindetrieb 22 ausgebildeten Mitteln zum Längsverschieben des Innenteils 11 verbunden. Weiterhin ist an diesem axialen Ende das Innenteil 11 mit einem beispielsweise als ein Zahnrad 24 ausgebildeten Mitteln verbunden, an denen angreifend eine Drehbewegung des Innenteils 11 erzeugbar ist. Aus Gründen der Übersichtlichkeit sind dabei der Kugelgewindetrieb 22, das Zahnrad 24, der Fräser 32 und dessen Antriebsmittel 34 schematisch umgeschnitten dargestellt.

Ebenfalls aus Gründen der Übersichtlichkeit ist ein mit dem Fräser 32 bearbeitbares Werkstück nicht dargestellt. Dabei kann das Werkstück ebenfalls am bearbeitungsraumseitigen axialen Ende eines Innenteils eines Wälzlagers, vergleichbar dem vorausgehend beschriebenen Innenteil 11 befestigt sein, so dass auch das Werkstück von außerhalb des Bearbeitungsraums in einer Raumrichtung längsverschieblich und gleichzeitig drehbar ist. Weiterhin kann in anderen Ausführungsformen der Erfindung wenigstens ein weiteres, innerhalb des Bearbeitungsraums angeordnetes Werkzeug wie vorausgehend für den Fräser 32 beschrieben, über ein entsprechendes Wälzlager von außerhalb des Bearbeitungsraums in einer Raumrichtung längsverschieblich und gleichzeitig drehbar vorgesehen sein.

Bei dem zu bearbeitenden Werkstück handelt es sich insbesondere um ein Kunststoff- oder Keramikteil. In einer speziellen Anwendnung ist dabei ein derartiges Teil nach einem entsprechenden Bearbeiten zum Erzielen einer individuell vorgebbaren Form als Ersatzteil zum Einsetzen in das insbesondere menschliche Gebiss, beispielsweise in der Ausbildung als Krone, Teilbrücke oder Brücke, vorgesehen.

### Bezugszeichenliste

- 2: Bearbeitungsraum
- 4: Wandung
- 5: Klappe

- 11: Innenteil
- 12: Außenteil
- 14: Käfig
- 15: Kugel
- 17, 18: Sprengring
- 19: Dichtung

- 22: Kugelgewindetrieb
- 24: Zahnrad

- 32: Fräser
- 34: Antriebsmittel

## Patentansprüche

1. Vorrichtung zum materialabtragenden Bearbeiten eines Werkstücks, mit einem Bearbeitungsraum (2), in dem das Werkstück und eine materialabtragende Werkzeugeinrichtung anordenbar sind, mit wenigstens einer verschließbaren Zugangsöffnung(5), und **dadurch gekennzeichnet, dass** die Vorrichtung folgende Merkmale beinhaltet :
- wenigstens ein Wälzlager mit einem Außenteil (12) und mit einem Innenteil (11), wobei zwischen dem Außen- und dem Innenteil (12, 11) angeordnete Wälzkörper (15) das Innenteil (11) gegenüber dem Außenteil (12) sowohl drehbar als auch längsverschieblich lagern,
- das Außenteil (12) ist eine Wandung (4) des Bearbeitungsraums (2) durchdringend angeordnet,
- ein innerhalb des Bearbeitungsraums (2) angeordnetes axiales Ende des Innenteils (11) ist mit Mitteln zum Halten des Werkstücks oder der Werkzeugeinrichtung verbindbar, und
- das andere, außerhalb des Bearbeitungsraums (2) angeordnete axiale Ende des Innenteils (11) ist mit Mitteln zum Drehen und Längsverschieben des Innenteils (11) verbindbar.

2. Vorrichtung nach Anspruch 1, wobei zwischen dem Außen- und dem Innenteil (12, 11) ein Käfig (14) für die Wälzkörper (15) angeordnet ist.

3. Vorrichtung nach Anspruch 2, wobei der Käfig (14) hülsenartig mit Aufnahmeöffnungen für die Wälzkörper (15) ausgebildet ist.

4. Vorrichtung nach Anspruch 3, wobei in jeder der Aufnahmeöffnungen genau ein Wälzkörper (15) angeordnet ist.

5. Vorrichtung nach einem der Ansprüche 2 bis 4, wobei die Wälzkörper (15) bezüglich einer Hauptachse des Käfigs (14) in dazu schräg verlaufenden Reihen angeordnet sind.

6. Vorrichtung nach einem der Ansprüche 2 bis 4, wobei die Wälzkörper (15) in Reihen parallel zur Hauptachse des Käfigs (14) und von Reihe zu Reihe in Hauptachsrichtung zueinander versetzt angeordnet sind.

7. Vorrichtung nach einem der Ansprüche 1 bis 6, wobei die Wälzkörper (15) Kugeln (15) sind.

8. Vorrichtung nach einem der Ansprüche 1 bis 7, wobei die Werkzeugeinrichtung ein Werkzeug (32) und dessen Antriebsmittel umfasst.

9. Vorrichtung nach Anspruch 8, wobei das Werkzeug (32) ein Fräser (32) ist.

10. Vorrichtung nach einem der Ansprüche 8 oder 9, wobei die Antriebsmittel einen Elektromotor umfassen.

11. Vorrichtung nach einem der Ansprüche 1 bis 10, wobei das Wälzlager eine Dichtung (17, 18) zum Abdichten zwischen Innen- und Außenteil (11, 12) umfasst.

12. Vorrichtung nach einem der Ansprüche 1 bis 11, wobei die Mittel zum Längsverschieben des Innenteils (11) einen Kugelgewindetrieb (22) umfassen.

13. Vorrichtung nach einem der Ansprüche 1 bis 12, wobei der Bearbeitungsraum (2) flüssigkeitsdicht ausgebildet ist.

## Claims

1. An apparatus for machining a workpiece, with a machining chamber (2), in which the workpiece and a machining tool device can be arranged, with at least one closable access opening (5), and **characterised in that** the apparatus includes the following features:
- at least one rolling bearing with an outer part (12) and with an inner part (11), wherein rolling bodies (15) arranged between the outer and inner parts (12,11) support the inner part (11) both rotatably and longitudinally displaceably relative to the outer part (12),
- the outer part (12) is arranged to pass through a wall (4) of the machining chamber (2),
- an axial end of the inner part (11) arranged inside the machining chamber (2) can be connected to means for holding the workpiece or tool device, and
- the other axial end of the inner part (11) arranged outside the machining chamber (2) can be connected to means for the rotation and longitudinal displacement of the inner part (11).

2. An apparatus according to Claim 1, wherein a cage (14) for the rolling bodies (15) is arranged between the outer and inner parts (12,11).

3. An apparatus according to Claim 2, wherein the cage (14) is of sleeve-like form with receiving apertures for the rolling bodies (15).

4. An apparatus according to Claim 3, wherein one rolling body (15) is arranged in each of the receiving apertures.

5. An apparatus according to any one of Claims 2 to 4, wherein the rolling bodies (15) are arranged in rows extending obliquely relative to a principal axis of the cage (14).

6. An apparatus according to any one of Claims 2 to 4, wherein the rolling bodies (15) are arranged in rows parallel to the principal axis of the cage (14) and from row to row are arranged offset to one another in the direction of the principal axis.

7. An apparatus according to any one of Claims 1 to 6, wherein the rolling bodies (15) are balls (15).

8. An apparatus according to any one of Claims 1 to 7, wherein the tool device comprises a tool (32) and its drive means.

9. An apparatus according to Claim 8, wherein the tool (32) is a milling cutter (32).

10. An apparatus according to either Claim 8 or 9, wherein the drive means comprise an electric motor.

11. An apparatus according to any one of Claims 1 to 10,
wherein the plain bearing comprises a seal (17,18) for providing a seal between the inner and outer parts (11,12).

12. An apparatus according to any one of Claims 1 to 11,
wherein the means for the longitudinal displacement of the inner part (11) comprise a ball-type linear drive (22).

13. An apparatus according to any one of Claims 1 to 12,
wherein the machining chamber (2) is designed to be fluidtight.

## Revendications

1. Dispositif pour usiner une pièce par enlèvement de matière comprenant
une chambre d'usinage (2) dans laquelle la pièce et un système d'outil assurant l'enlèvement de matière peuvent être placés et qui présente au moins une ouverture d'accès (5) obturable, **caractérisé en ce que** le dispositif présente les caractéristiques suivantes :
au moins un palier à roulement avec un élément extérieur (12) et un élément intérieur (11), des corps roulants (15) placés entre les éléments extérieur et intérieur (12, 11) supportant avec possibilité de rotation et de translation l'élément intérieur (11) par rapport à l'élément extérieur (12),
l'élément extérieur (12) est disposé de telle sorte qu'il traverse une paroi (4) de la chambre d'usinage (2),
une extrémité axiale de l'élément intérieur (11) située à l'intérieur de la chambre d'usinage (2) peut être reliée à des moyens de fixation de la pièce ou du système d'outil et
l'autre extrémité axiale de l'élément intérieur (11) située à l'extérieur de la chambre d'usinage (2) peut être reliée à des moyens de mise en rotation et de déplacement en translation de l'élément intérieur (11).

2. Dispositif selon la revendication 1, une cage (14) pour les corps roulants (15) étant disposée entre les éléments extérieur et intérieur (12, 11).

3. Dispositif selon la revendication 2, la cage (14) étant conformée en douille pourvue d'ouvertures formant logement pour les corps roulants (15).

4. Dispositif selon la revendication 3, exactement un corps roulant (15) étant disposé dans chacune des d'ouvertures formant logement.

5. Dispositif selon une des revendications 2 à 4, les corps roulants (15), par rapport à un axe principal de la cage (14), étant disposés en rangées inclinées par rapport audit axe.

6. Dispositif selon une des revendications 2 à 4, les corps roulants (15) étant disposés en rangées parallèles à l'axe principal de la cage (14) et étant décalés les uns par rapport aux autres dans la direction de l'axe principal, d'une rangée à l'autre.

7. Dispositif selon une des revendications 1 à 6, les corps roulants (15) étant des billes (15).

8. Dispositif selon une des revendications 1 à 7, le système d'outil comprenant un outil (32) et les moyens d'entraînement de celui-ci.

9. Dispositif selon la revendication 8, l'outil (32) étant une fraise (32).

10. Dispositif selon une des revendications 8 ou 9, les moyens d'entraînement comprenant un moteur électrique.

11. Dispositif selon une des revendications 1 à 10, le palier à roulement comprenant un joint (17, 18) qui assure l'étanchéité entre les éléments intérieur et extérieur (11, 12).

12. Dispositif selon une des revendications 1 à 11, les moyens de déplacement en translation de l'élément intérieur (11) comprenant un mécanisme à vis et billes (22).

13. Dispositif selon une des revendications 1 à 12, la chambre d'usinage (2) étant étanche aux liquides.
